# EUROPÄISCHE PATENTSCHRIFT

(11) **EP 0 491 062 B1**
(45) Veröffentlichungstag und Bekanntmachung des Hinweises auf die Patenterteilung: **15.02.1995**
(21) Anmeldenummer: 90124440.0
(22) Anmeldetag: 17.12.1990
(51) Int. Cl.: H04B 3/46, H04B 17/02

(54) **Verfahren zur In-Betrieb-Überwachung von Übertragungseinrichtungen der elektrischen Nachrichtenübertragungstechnik und Vorrichtung zur Durchführung des Verfahrens**
Method for in-service monitoring of transmission systems of the electrical telecommunication technique and apparatus for implementing this method
Procédé de surveillance d'un service d'installations de transmission de la technique de télécommunication électrique et dispositif de mise en oeuvre du procédé

(43) Veröffentlichungstag der Anmeldung: 24.06.1992
(73) Patentinhaber: SIEMENS AKTIENGESELLSCHAFT, 80333 München (DE)
(72) Erfinder: Dömer, Josef, Dipl.-Ing., W-8021 H.Schäftlarn (DE); Rathgeber, Max, Dipl.-Ing., W-8028 Taufkirchen (DE); Müller, Karl, Dipl.-Ing., W-8190 Wolfratshausen (DE); Weick, Albert, Dipl.-Ing. (FH), W-1000 Berlin 30 (DE)

(56) Entgegenhaltungen:
- EP-A- 0 143 489
- WO-A-89/08354

## Beschreibung

### Siemens Aktiengesellschaft

### Verfahren zur In-Betrieb-Überwachung von Ubertragungseinrichtungen der elektrischen Nachrichtenübertragungsstechnik und Vorrichtung zur Durchführung des Verfahrens

Die Erfindung bezieht sich auf ein wie im Oberbegriff des Patentanspruchs 1 angegebenes Verfahren zur In-Betrieb-Überwachung von Übertragungseinrichtungen der elektrischen Nachrichtenübertragungstechnik.

Ein derartiges Verfahren ist bereits aus der DE-OS 38 06 949 bekannt. Bei dem bekannten Verfahren ist den Betriebsstellen einer Nachrichten-Übertragungseinrichtung jeweils eine Prozessoreinheit zugeordnet. Eine Prozessoreinheit tauscht als Aufrufeinheit mit weiteren Prozessoreinheiten im Aufrufbetrieb Informationen aus. Die Prozessoreinheiten lassen sich von einem ersten auf einen zweiten Übertragungsmodus umschalten. Im ersten Ubertragungsmodus werden die Telegramme ohne Zwischenspeicherung, im zweiten Übertragungsmodus nur bei Fehlerfreiheit durchgeschaltet.

Die Ortungstelegramme werden asynchron mit einem Standardprotokoll übertragen. Als Sende- und Empfangsvorrichtungen sind UART-Bausteine vorgesehen. Bei einer Ausführungsform der bekannten Überwachungsvorrichtung ist an den Endstellen einer Nachrichtenübertragungsstrecke und an einem Zwischenregenerator jeweils ein PC an die Prozessoreinheit angeschlossen. Ist ein Antworttelegramm gestört und hält es dadurch die vorgegebenen Anforderungen nicht ein, so wird dies durch ein Ortungsmodul bzw. den an die Prozessoreinheit angeschlossenen PC erkannt. Bei Dauerstörungen empfängt das Ortungsmodul bzw. der PC nur korrekte Antworttelegramme von Prozessoreinheiten, die sich vor dem Störungsort befinden. Dadurch kann auch bei Dauerstörungen der Störungsort festgestellt werden.

Mit Hilfe eines derartigen Verfahrens kann insbesondere in digitalen Datenübertragungssystemen mit einer Reihe von Zwischenregenerationsstellen der Betriebszustand der Stationen und der Endstellen laufend überprüft werden und in Störungsfällen schnell eine Fehlerbeseitigung eingeleitet werden. Die Prozessoreinheiten der Endstellen verfügen über die gesamte Überwachungsinformation.

Digital-Übertragungseinrichtungen, die mit Hilfe von Telemetriesignalen überwacht werden, sind ferner aus der Zeitschrift telcom report 7 (1984), Heft 6, Seite 367 bis 371 und Seite 393 bis 397 bekannt. Auch bei diesen Übertragungseinrichtungen stehen die Überwachungsinformationen einer Zentrale zur Verfügung.

Aufgabe der Erfindung ist es, das Verfahren der eingangs genannten Art derart zu vervollkommnen, daß die über den Fernwirkkanal übertragenen Überwachungsinformationen auch an den Prozessoreinheiten der Zwischenstellen zur Verfügung stehen und daß das Verfahren ohne adressengesteuerten Aufruf von Stationen auskommt.

Gemäß der Erfindung wird die genannte Aufgabe durch die im kennzeichnenden Teil des Patentanspruchs 1 angegebenen Verfahrensschritte gelöst. Dabei senden die Prozessoreinheiten von sich aus, d.h. ohne Aufruf durch eine zentrale Aufrufeinheit, in zeitlicher Folge Fernwirktelegramme aus.

Das erfindungsgemäße Verfahren hat den Vorteil, daß die mit Hilfe der Überwachungseinrichtung erfaßten und übertragenen Überwachungsinformationen mit besonders geringem Aufwand übertragen werden und an allen Prozessoreinheiten zur Verfügung stehen. Um ein Bild vom Betriebszustand der überwachten Nachrichten-Übertragungseinrichtung zu gewinnen, genügt es, in einer der Betriebsstellen die in der betreffenden Prozessoreinheit gespeicherten Überwachungsinformationen auszuwerten.

Eine Beobachtung des Nachrichtenflusses bzw. eine besondere Auswertung der mittels der betreffenden Prozessoreinheit übertragenen Überwachungsinformationen ist dabei nicht erforderlich. Im Falle einer Unterbrechung des Fernwirkkanals entstehen Teilbereiche, die ohne besondere Maßnahmen arbeitsfähig sind.

Die von der Prozessoreinheit ausgesendeten Fernwirktelegramme oder Folgen von Fernwirktelegrammen können jeweils die gesamten Überwachungsinformationen enthalten, die in der Speichervorrichtung der sendenden Prozessoreinheit gespeichert sind, d.h. die örtlich erfaßten und die gesamten über den Fernwirkkanal empfangenen Überwachungsinformationen. Dabei ist es allerdings erforderlich, daß die Prozessoreinheit, die ein solches Fernwirktelegramm empfängt, zwischen den Informationen unterscheidet, die sie bereits gespeichert hat und solchen, die ihr neu mitgeteilt werden.

Enthalten die an den einen Übertragungsabschnitt ausgesandten Fernwirktelegramme bzw. Folgen von Fernwirktelegrammen jeweils nur die Information, die die betreffende Prozessoreinheit über den anderen Übertragungsabschnitt empfängt, so sind die zu übertragenden Datenmengen besonders klein und der mit der Auswertung der empfangenen Fernwirktelegramme in den Prozessoreinheiten verbundene Aufwand besonders gering. Außerdem benötigt der Informationsaustausch besonders wenig Zeit.

Bei der Weiterbildung nach Anspruch 2 werden Telegramme abwechselnd für die eine und für die andere Senderichtung gebildet. Die eigentliche Aussendung kann dabei abwechselnd oder zeitlich überlappend erfolgen, insbesondere programm-, interrupt- oder zeitgesteuert.

Man kann jeweils die gesamte auszusendende Überwachungsinformation in einem einzigen Fernwirktelegramm unterbringen und den Informationsquellen jeweils einen bestimmten Platz im Fernwirktelegramm zuteilen, so daß z.B. durch Abzählen von Bytes die jeweilige Quellenadresse bestimmt werden kann.

Das Verfahren nach Anspruch 3 sieht für die von den einzelnen Prozessoreinheiten stammenden Überwachungsinformationen jeweils ein eigenes Fernwirktelegramm vor, das als Adresse eine Quelladresse, nämlich die Adresse der Prozessoreinheit enthält, von der die Überwachungsinformationen ursprünglich stammen. Die Telegramme sind in vorgegebener Weise voneinander getrennt, insbesondere durch Pausen vorgegebener Dauer.

Die Maßnahmen nach Anspruch 4 sehen vor, daß bei fehlendem Empfang bestimmte Überwachungsinformationen in der Speichervorrichtung der betreffenden Prozessoreinheit verworfen werden. Dies kann insbesondere durch Markieren oder Löschen der Informationen erfolgen.

Die Maßnahmen nach Anspruch 5 haben den Vorteil, daß Einstellungs- und/oder Übertragungsfehler bezüglich der in den Prozessoreinheiten jeweils eingestellten Adresse und Konfiguration erkannt werden.

Weitere vorteilhafte Ausbildungen des erfindungsgemäßen Verfahrens gehen aus den Patentansprüchen 6 bis 8 hervor.

In Anspruch 9 ist eine zweckmäßige Vorrichtung zur Durchführung des erfindungsgemäßen Verfahrens angegeben. Aus Anspruch 10 geht eine vorteilhafte Weiterbildung der Vorrichtung nach Anspruch 9 hervor.

Die Erfindung wird anhand der in den Figuren dargestellten Ausführungsbeispiele näher erläutert. Es zeigen
- Fig. 1: eine Überwachungseinrichtung mit einer Kettenschaltung mehrerer Prozessoreinheiten,
- Fig. 2: den Aufbau einer Prozessoreinheit einer,
- Fig. 3: weitere Einzelheiten der Prozessoreinheit nach Fig. 2.

Die Figuren 4 bis 8 zeigen Flußdiagramme für ein Programm-Modul einer Prozessoreinheit und zwar

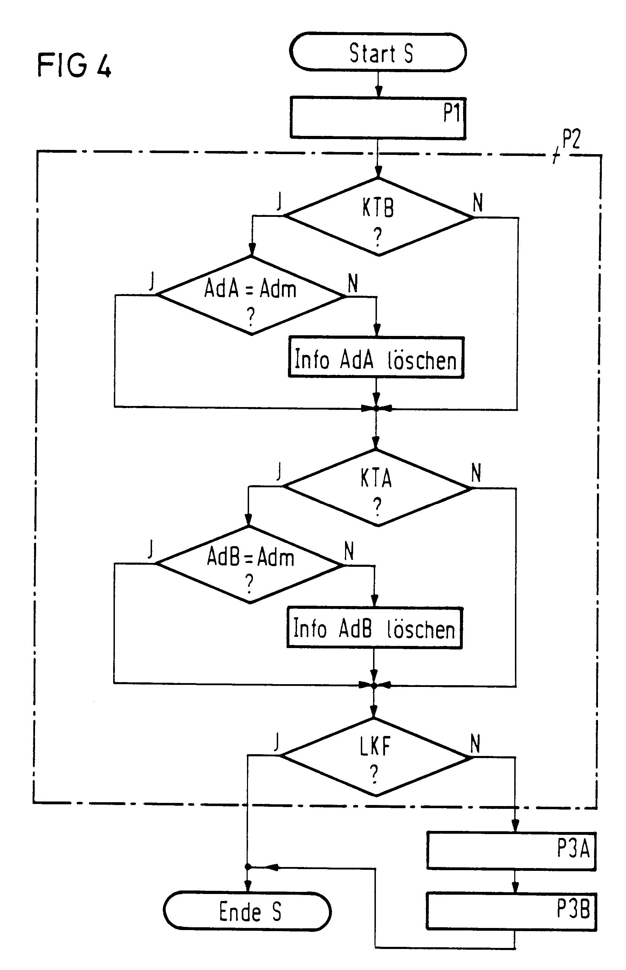

- Fig. 4: ein Flußdiagramm für ein Sende-Software-Modul,

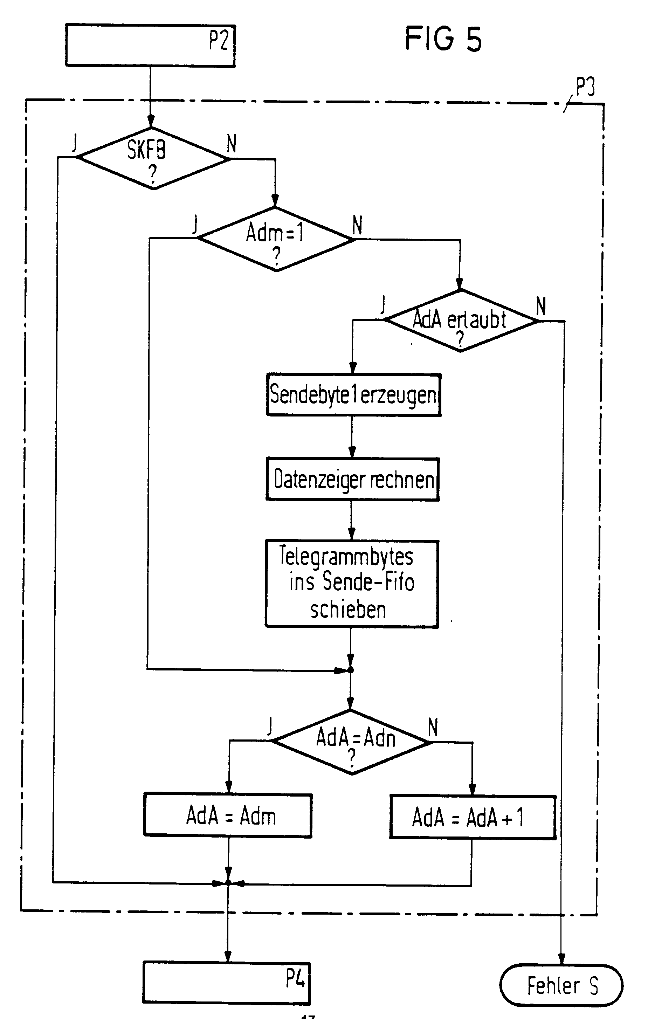

- Fig. 5: weitere Einzelheiten für das Flußdiagramm nach Fig. 4,

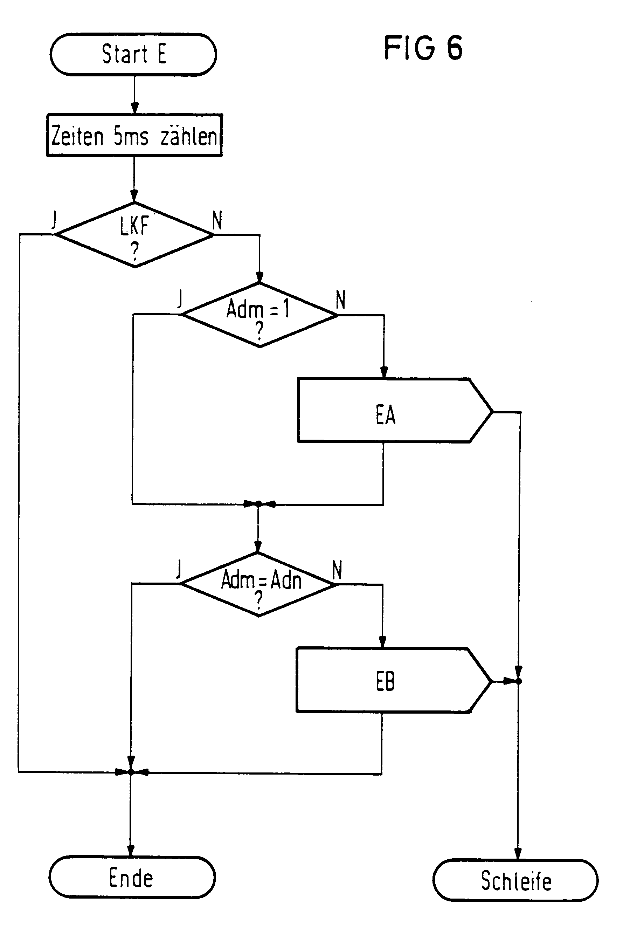

- Fig. 6: ein Flußdiagramm für den Empfangsteil des Programm-Moduls der Prozessoreinheit und

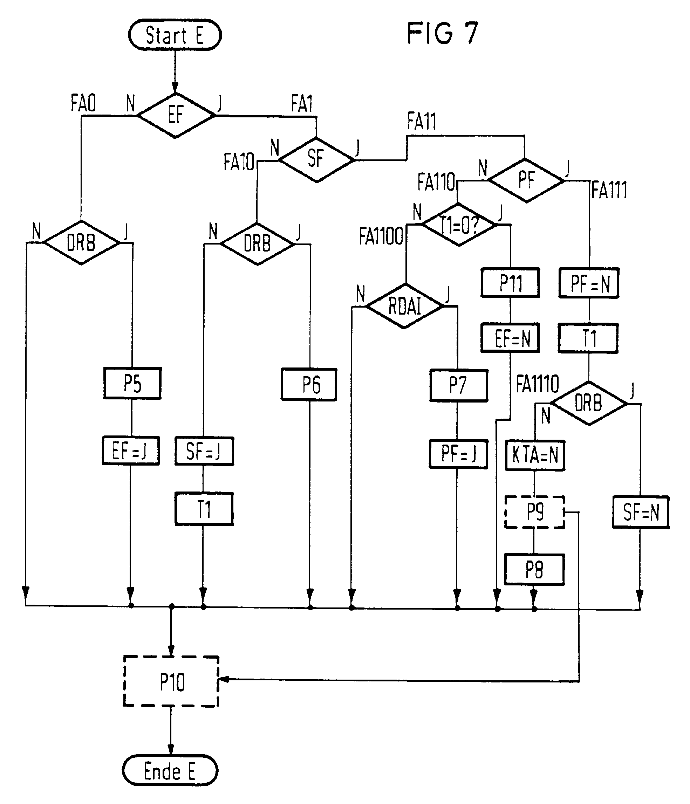

- Fig. 7 bis 8: weitere Einzelheiten des Flußdiagramms nach Fig. 6.

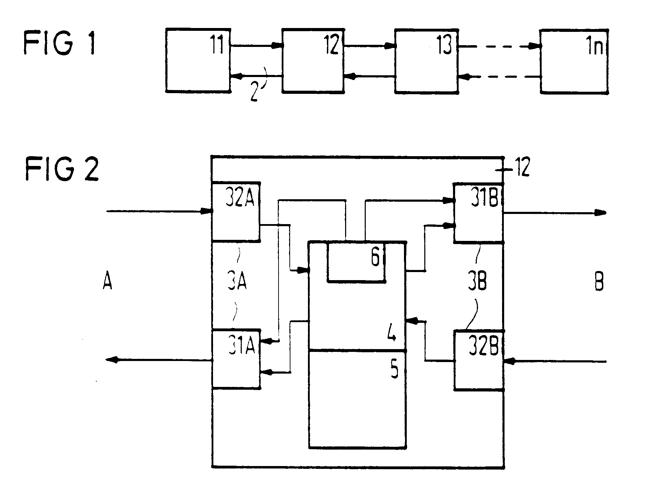

Bei der in Fig. 1 gezeigten Überwachungsvorrichtung sind die Prozessoreinheiten 11 ... 1n über einen bidirektionalen Fernwirkkanal, nämlich den Vierdraht-Fernwirkkanal 2 in Kette geschaltet. Jede Prozessoreinheit ist einer Betriebsstelle einer in der Figur nicht dargestellten Nachrichten-Übertragungseinrichtung zugeordnet. Die Prozessoreinheiten 11 und 1n gehören jeweils zu einer Endstelle, die Prozessoreinheiten 12 und 13 jeweils zu einer Zwischenstelle der Nachrichten-Übertragungseinrichtung. Von den Betriebsstellen ist insbesondere wenigstens eine der Zwischenstellen und/oder als Teilnehmerstelle eine der Endstellen nicht besetzt.

Die in Fig. 2 gezeigte Prozessoreinheit enthält die Sende-/Empfangsvorrichtungen 3a und 3b. Die Sende-/Empfangsvorrichtung 3a besteht aus dem Sender 31 a und dem Empfänger 32a, die Sende-/Empfangsvorrichtung 3b aus dem Sender 31b und dem Empfänger 32b.

Der Mikroprozessor 4 ist mit der Speichervorrichtung 5 versehen und enthält, insbesondere durch eine Funktion des Mikroprozessors 4 realisiert, den Taktgeber 6. Mit Hilfe des Taktgebers 6 werden die Sender 31a und 31b abwechselnd aktiviert, so daß sie die vom Mikroprozessor 4 erhaltenen Daten aussenden können. Die Empfänger 32a und 32b sind mit ihren Ausgängen an den Mikroprozessor 4 geführt.

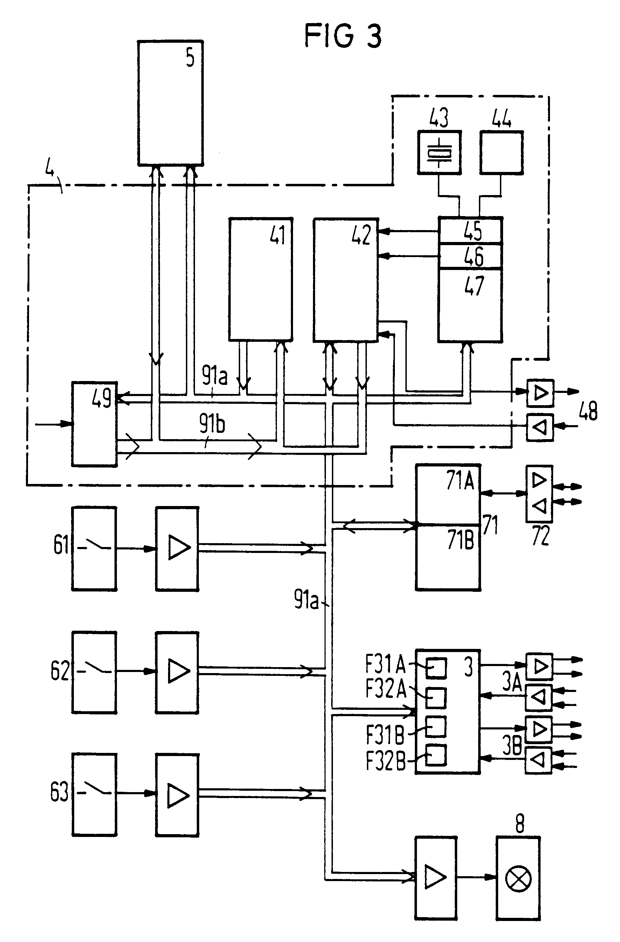

Fig. 3 zeigt weitere Einzelheiten der Prozessoreinheit nach Fig. 2. Die Zentraleinheit 42 ist über den Adreß-/Daten-Bus 91a und den Adreß-Bus 91b mit dem Latch 49 verbunden. Die Zentraleinheit 42 ist ferner über den Bus 91a mit der durch ein RAM gebildeten Speichervorrichtung 5, dem EPROM 41 und dem Überwachungsbaustein 47 verbunden. Über den Adreß-/Daten-Bus 91a ist die Zentraleinheit 42 mit dem Alarmgeber 61, dem Meldungsgeber 62 und der Einstellvorrichtung 63 verbunden.

Ferner sind über den Bus 91a der HDLC-Baustein 71, der UART 3 und die Anzeigevorrichtung 8 an die Zentraleinheit 42 angeschlossen.

In der Speichervorrichtung 5 werden die örtlich erfaßten Überwachungsinformationen und die von allen anderen Prozessoreinheiten der Überwachungseinrichtung empfangenen Überwachungsinformationen in einem der jeweiligen Adresse zugeordneten Speicherbereich gespeichert. Die Überwachungsinformationen sind Betriebszustandsmeldungen, Alarmmeldungen oder dergleichen.

Mit Hilfe des Alarmgebers 61 werden der Prozessoreinheit vier Alarme von einem Overhead-Multiplexer der überwachten Digitalsignal-Übertragungseinrichtung zugeführt. Der Meldungsgeber 62 bezieht sich auf Meldungen, die der Prozessoreinheit von örtlichen Meldungsgebern über Meldeleitungen zugeführt werden und z.B. eine offene Tür, eine zu hohe Temperatur oder dgl. betreffen können.

Die Einstellvorrichtung 63 umfaßt sechzehn lokale Informationsschalter für die Einstellung der Adresse der betreffenden Prozessoreinheit, der Anzahl der Prozessoreinheiten in der Kettenschaltung bzw. Überwachungseinrichtung und eine Kodierung für die erfaßten Alarme.

Das EPROM 41 dient als Speicher für die Programme der Prozessoreinheit.

Die Zentraleinheit 42 besteht im gezeigten Beispiel aus einem Mikrocontroller, der einen 8-Bit-Prozessor enthält. Die Zentraleinheit 42 und das Latch 49 arbeiten in der Weise zusammen, daß das Latch 49 aus dem Adreß-/Daten-Bus 91a den Low-Byte-Teil der 16-Bit-Adresse abspeichert und in der Zeit zur Verfügung stellt, in der die Daten im Adreß-/Daten-Bus 91a und die High-Byte-Adresse im Adreßbus 91b anstehen.

Der Überwachungsbaustein 47 überwacht die Prozessoreinheit. Mit Hilfe des an den Überwachungsbaustein 47 angeschlossenen Watchdog 46 läßt sich die Zentraleinheit 42 zurücksetzen. Der Taktgenerator 45 ist mit dem einen Grundtakt liefernden Taktgeber 43 und der Vorrichtung 44 zur Spannungsüberwachung verbunden. Die zentrale Prozessoreinheit 47 ist ferner mit der PC-Schnittstelle 48 versehen, die insbesondere eine V.28-Schnittstelle ist. Der HDLC-Controller 71 für Kanal A und B stellt über den Schnittstellenwandler 72 zwei Anschlüsse für je einen seriellen Meldekanal, insbesondere mit der Schnittstelle RS 485 zur Verfügung.

Der UART 3 führt zu den Sende-/Empfangsvorrichtungen 3A und 3B, an die jeweils ein Übertragungsabschnitt des Vierdraht-Fernwirkkanals angeschlossen wird. Die Anzeigevorrichtung 8 dient zur Anzeige der in der Speichervorrichtung 5 gespeicherten Meldungen.

Die Prozessoreinheit ist jeweils Bestandteil einer Fernüberwachungsbaugruppe. Die Prozessoreinheiten tauschen über den bidirektionalen Fernwirkkanal ihre Meldungsdaten derart miteinander aus, daß im Normalbetrieb jede Prozessoreinheit über sämtliche von den Prozessoreinheiten erfaßten Daten verfügt.

Alle Prozessoreinheiten enthalten zwei Sende-/Empfangsvorrichtungen und können daher Daten in beide Richtungen einer Übertragungsstrecke senden und Daten aus beiden Richtungen einer Übertragungsstrecke empfangen. Die an den beiden Enden der Kettenschaltung angeordneten Prozessoreinheiten 11 und 1n machen nur von einer der beiden Sende-/Empfangsvorrichtungen Gebrauch.

Die Prozessoreinheiten sind an der Endstelle mit der Stationsadresse Adl beginnend fortlaufend durchnummeriert. Zu diesem Zweck ist an jeder Fernüberwachungsbaugruppe mit Schaltern die eigene bzw. lokale Stationsadresse Am eingestellt. Ferner ist an jeder Fernüberwachungsbaugruppe mit weiteren Schaltern die Anzahl n der am Informationsaustausch teilnehmenden Stationen eingestellt.

Der Sender 31A der Sende-/Empfangsvorrichtung 3a ist mit dem Empfänger 32B der Station mit der nächstniedrigeren Stationsadresse und der Sender 31B der Sende-/Empfangsvorrichtung 3B mit dem Empfänger 32A der Station mit der nächst höheren Stationsadresse verbunden.

Die Prozessoreinheit sendet mittels des Senders 31A die eigenen Daten und die Daten, die sie mittels des Empfängers 32B empfangen hat, aus. Mittels des Senders 31B sendet sie die eigenen Daten und die Daten, die sie mittels des Empfängers 32A empfangen hat. Die Endstelle mit der Adresse 1 sendet und empfängt nur über die Sende-/Empfangsvorrichtung 3B, die Endstelle mit der Adresse n sendet und empfängt nur über die Sende-/Empfangsvorrichtung 3A.

Die von den Prozessoreinheiten ausgesandten Fernwirktelegramme bestehen jeweils aus acht Bytes. Das erste Telegrammbyte enthält jeweils die Adresse der Station, die der ursprüngliche Absender der Telegramminformation ist. Das zweite bis siebente Byte erhalten die aus internen und externen Meldungen bestehenden Daten. Im achten Byte wird die über die Einstellvorrichtung 63 auf der Prozessoreinheit eingestellte Konfiguration der Betriebsstellen der überwachten Übertragungseinrichtung übertragen.

Das Telegrammbyte mit der Stationsadresse wird dadurch als erstes Byte markiert, daß zwischen den Fernwirktelegrammen eine Pause liegt. Das Adressbyte ist also das erste Byte nach einer Pause, wogegen die folgenden Bytes ohne Pause aneinandergereiht ausgesendet werden.

Die zwischen den Fernwirktelegrammen vorgesehene Pause entsteht dadurch, daß die acht Telegrammbytes im Rhythmus von 50ms in den Sender geschoben werden und eine Bitfolgefrequenz von 2400 Bit/s eingestellt ist. Mit den Start-, Stop- und Paritybits dauert das Senden der Telegrammbytes etwa 37ms. Somit entsteht jeweils eine Pause von etwa 13ms. Der Empfänger erkennt die Pause und ordnet die Bytes in entsprechender Weise richtig zu.

Als Sende-/Empfangsvorrichtung 3A und 3B einer Prozessoreinheit dient ein Baustein, der für Sender und Empfänger Puffer-Fifos besitzt, z.B. der Dual-UART-Baustein vom Typ NS16C552. In diesem Fall werden die acht Bytes eines vom Sender 31A bzw. 31B auszusendenden Fernwirktelegrammes unmittelbar hintereinander in das Sende-Fifo F31A bzw. F31B geschoben, so daß das Sendemodul von einer weiteren Steuerung des Sendevorgangs entlastet ist.

Im Normalbetrieb sendet der Sender 31A Telegramme mit Überwachungsinformationen der eigenen Prozessoreinheit und Überwachungsinformationen der Prozessoreinheiten mit der Adresse Adm + 1 bis Adn und der Sender 31B Telegramme mit Überwachungsinformationen der eigenen Prozessoreinheit und Überwachungsininformationen der Prozessoreinheiten mit der Adresse Adm - 1 bis Adl aus. Die Überwachungsinformationen können insbesondere und/oder Alarme der überwachten Betriebsstellen sein.

Der Empfänger 32A bzw. 32B kann jeweils so betrieben werden, daß acht ins Empfangs-Fifo B32A bzw. F32B gelaufene Bytes das Kriterium RDAI (Received Data Available Interrupt) auslösen. Vorausgesetzt, der Empfänger ist zur Pause synchron, können somit auch auf der Empfangsseite die Telegrammbytes gebündelt verarbeitet werden. Zur Synchronisation auf die Pause werden die ankommenden Bytes einzeln verarbeitet. Dabei wird das Data-Ready-Bit bzw. DR-Bit des Line Status Registers abgefragt und das Fifo geleert.

Der Normalbetrieb des Empfängers 32A bzw. 32B wird somit in mehreren, im folgenden näher erläuterten Stufen erreicht.

Ohne Empfang wird das DR-Bit vom UART-Empfänger nicht gesetzt.

Im Empfangsfall leitet das dann gesetzte DR-Bit einen Phasensuchlauf ein. Dabei wird die Pause gesucht, in der das DR-Bit nicht gesetzt wird.

Wurde Pause gefunden, so wird auf das Kriterium RDAI gewartet. Kommt dieses Kriterium, so werden die im Fifo gespeicherten Daten in einen Puffer geschoben. Ist beim nächsten Ansprung des Empfangsmoduls, d.h. 5ms später kein neues Byte eingelaufen und daher das DR-Bit nicht gesetzt, ist die Synchronität durch die erfolgreiche Prüfung bestätigt und die Daten des Puffers werden ausgewertet.

Bei Normalbetrieb herrscht somit Synchronität. Dabei wird zunächst gewartet, bis acht Bytes in das Fifo F32A bzw. F32B gelaufen sind. Nach Auftreten des Kriteriums RDAI werden diese Bytes in den Puffer geschoben. Im nächsten Durchgang wird die Pause verifiziert. Bei erfolgreicher Verifizierung werden die Pufferbytes als gültig erklärt. Schließlich werden die Bytes 2 bis 8 in einem Datenfeld der Speichervorrichtung 6 eingetragen, das für die Speicherung der Meldungen vorgesehen ist und insbesondere ein Alarme-Speicherfeld ist. Die Stelle, an der die Bytes 2 bis 8 im Datenfeld gespeichert werden, ist durch die im ersten Byte des Fernwirktelegramms enthaltene Stationsadresse definiert.

Bei unterbrochener bzw. gestörter Übertragung kann der Empfänger 32A bzw. 32B mindestens während einer vorgegebenen Auszeit TA, die insbesondere eine Sekunde beträgt, kein Telegramm auswerten. Die Prozessoreinheit setzt daraufhin in den örtlichen Meldungen die Meldung KTA "vom Empfänger 32A werden keine Telegramme empfangen" bzw. KTB "vom Empfänger 32B werden keine Telegramme empfangen".

Um eine Weitergabe von nicht aktuellen Alarmzuständen zu verhindern, werden in der Speichervorrichtung 6 die Daten der Prozessoreinheiten zurückgesetzt, deren Meldungen bei ungestörtem Programm gesendet werden würden.Vom Rücksetzen ausgenommen sind die örtlich erfaßten Daten der eigenen Prozessoreinheit.

Bei gestörtem Empfang an wenigstens einem der Empfänger 32A und 32B sendet die Prozessoreinheit in beiden Richtungen weiterhin das vollständige Fernwirktelegramm, gibt aber nur die von der Fernüberwachungseinrichtung gewonnenen oder örtlich erfaßten Meldungen weiter. Dieser Fehlerzustand wird mit dem ersten, von der betrachteten Prozessoreinheit ausgewerteten Telegramm zurückgenommen.

Ist in der Prozessoreinheit die eigene Adresse Adm oder die Anzahl der teilnehmenden Prozessoreinheiten n mit einer Schalterstellung O oder die eigene Adresse Adm größer als die Adresse Adn eingestellt, so ist die Prozessoreinheit falsch konfiguriert. In diesem Fall wird in beiden Richtungen weder gesendet noch empfangen. Der Fehlerzustand wird vom Hauptprogramm über ein entsprechendes Flag LKF (Lokaler-Konfigurations-Fehler) gesetzt und über dieses auch zurückgenommen.

Wird im Empfänger 32A während einer Fehlzeit TF von mindestens 3s Dauer kein Telegramm der Nachbarstation mit der Adresse m-1 oder das Telegramm einer Prozessoreinheit empfangen, die nicht im Adressbereich 1 bis m-1 der Nachbarstationen liegt, so ist eine andere Prozessoreinheit falsch konfiguriert. In diesem Falle wird in der betrachteten Prozessoreinheit ein entsprechendes Flag SKFA "System-Konfiguration-Fehler auf Seite A" gesetzt und vom Sender 31B nicht mehr gesendet.

Wird im Empfänger 32B während einer Fehlzeit von mindestens 3s Dauer kein Telegramm der Nachbarstation mit der Adresse m+1 oder das Telegramm einer Prozessoreinheit empfangen, die nicht im Adressbereich m+1 bis n der Nachbarstationen liegt, so ist eine andere Prozessoreinheit falsch konfiguriert. In diesem Falle wird in der betrachteten Prozessoreinheit ein entsprechendes Flag SKFB "System-Konfiguration-Fehler auf Seite B" gesetzt und vom Sender 31A nicht mehr gesendet.

Diese Fehlerzustände werden zurückgenommen, wenn das Telegramm der betreffenden Nachbarstation empfangen wurde und mindestens während einer vorgegebenen Schutzzeit von insbesondere einer Sekunde Dauer nur Telegramme mit Adressen im erlaubten Bereich empfangen wurden oder wenigstens während einer vorgegebenen Auszeit von insbesondere einer Sekunde Dauer vom Empfänger 32A bzw. 32B kein Telegramm ausgewertet wurde. Das Kriterium KTA (kein Telegramm am Empfänger 32A) löscht das Flag SKFA. Das Kriterium KTB (kein Telegramm am Empfänger 32B) löscht das Flag SKFB.

Ergibt sich im Programmablauf ein Zustand, der bei normalem Ablauf nicht auftreten darf, so liegt ein interner Ablauffehler vor. In diesem Fall wird in eine Unendlichschleife gesprungen, so daß über den Watchdog neu initialisiert wird bzw. eine Ausfallmeldung abgegeben wird.
Für das Senden und für das Empfangen ist jeweils ein eigenes Programmodul vorgesehen. Bei der Initialisierung nach einem Hardware-Reset werden zunächst die Register des UART-Bausteines geladen. Flags und Register, die die Programmodule Senden und Empfangen benötigen, werden mit dem Anfangswert geladen.

Außerdem werden die Register des für die Speicherung der Meldungen vorgesehenen Speicherbereiches der Speichervorrichtung 6 zurückgesetzt.

Das Unterprogramm Senden wird vom Hauptprogramm periodisch im Abstand von nominell 50 ms aufgerufen. Mit dieser Zeitbasis werden die Auszeiten TA für fehlenden Empfang am Empfänger 32A bzw. 32B die Fehlzeiten für fehlende Nachbarstation und die Schutzzeiten für falsche Empfangsadressen abgeleitet. Diese Zeiten werden mit Hilfe des Schrittes "Zählerstand des Zeitzählers erniedrigen" gewonnen. Die Schutzzeit TS beträgt insbesondere 1 s.

Die Prozessoreinheit nach Fig. 2 empfängt jeweils über den Empfänger 32A Fernwirktelegramme mit Überwachungsinformationen von den Prozessoreinheiten, die mit ihr über den Übertragungsabschnitt A verbunden sind. Über den Empfänger 32B empfängt sie Fernwirktelegramme mit Überwachungsinformationen von den Prozessoreinheiten, die mit ihr über den Übertragungsabschnitt B verbunden sind. Die Prozessoreinheit sendet über den Sender 32A eine Folge von Fernwirktelegrammen mit den Adressen der über den Übertragungsabschnitt B erreichbaren und über den Sender 31A eine Folge von Fernwirktelegrammen mit den Adressen der über den Übertragungsabschnitt A erreichbaren Prozessoreinheiten aus.

Für den Fall, daß eine Prozessoreinheit im Anschluß an einen normalen Betrieb vom Übertragungsabschnitt A und/oder B keine Telegramme mehr empfängt, sind die Überwachungsinformationen von den zum betreffenden Übertragungsabschnitt gehörenden Prozessoreinheiten unter Umständen nicht mehr aktuell. Um sicherzustellen, daß nur aktuelle Überwachungsinformationen weitergegeben werden, werden Überwachungsinformationen nur vom Sender der einen Sende-Empfangsvorrichtung ausgesandt, wenn der Empfänger der jeweils anderen Sende-/Empfangsvorrichtung Telegramme empfängt. Insbesondere werden bei fehlendem Empfang am Empfänger 32a die über den Übertragungsabschnitt A empfangenen und bei fehlendem Empfang am Empfänger 32B die über den Übertragungsabschnitt B empfangenen Überwachungsinformationen in der Speichervorrichtung gelöscht.

Im folgenden wird mit AdA die laufende Adresse der vom Sender 32A und mit AdB die laufende Adresse AdB der vom Sender 31b ausgesendeten Telegramme bezeichnet. Ferner bedeutet J ja und N nein.

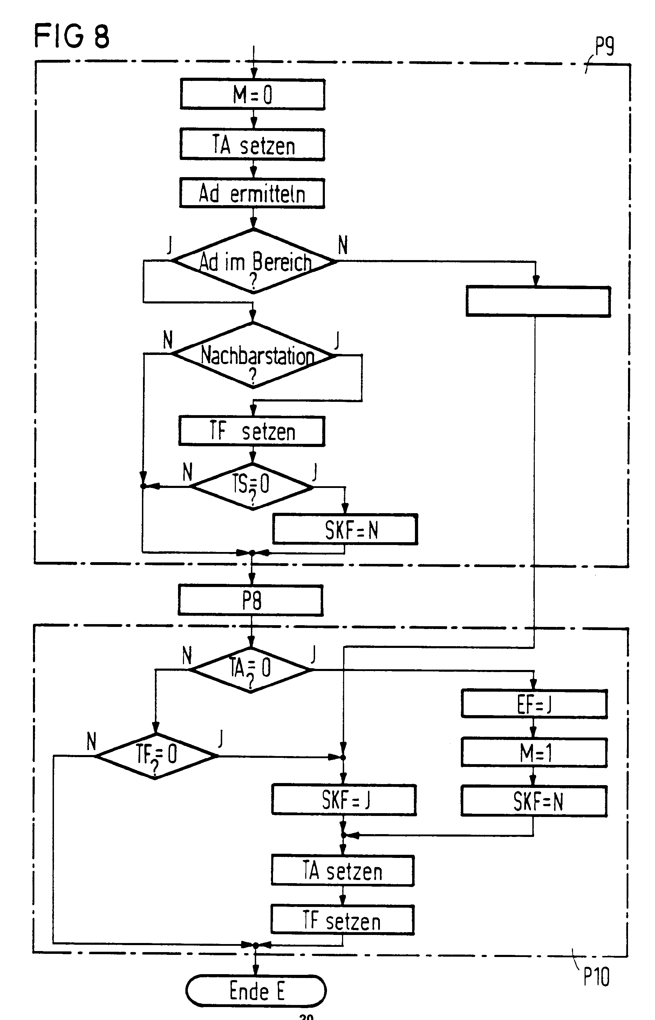

Fig. 4 zeigt ein Flußdiagramm für ein Sende-Software-Modul. Zunächst wird gegebenenfalls im Prozeßschritt P1 der Zählerstand der Zeitzähler für die Zeiten TA, TF und TS nach Fig. 8 erniedrigt.

Bei fehlendem Empfang während der zugeordneten Auszeit TA am Empfänger 32B wird das Flag KTB gesetzt. Daraufhin werden die Daten der Prozessoreinheit unter der Adresse AdA gelöscht, sofern die Adresse ungleich der lokalen Adresse Adm ist. Bei fehlendem Empfang am Empfänger 32A während der zugeordneten Auszeit TA wird das Flag KTA gesetzt und die Daten der Prozessoreinheit unter der Adresse AdB gelöscht, sofern AdB ungleich der lokalen Adresse Adm ist.

Bei einer Fehlkonfiguration der eigenen Prozessoreinheit, also gesetztem Flag LKF wird sofort nach "Ende S", d.h. Ende des Sendevorganges gesprungen, andernfalls werden die Sendefunktionsblöcke P3A und P3B für die Sender 31A und 31B durchlaufen.

Fig. 5 zeigt den Sendefunktionsblock für den Sender 31A.

Zunächst wird geprüft, ob die Adresse des zu sendenden Telegramms in dem durch die Konfiguration vorgegebenen Adreßbereich liegt.

Wurde vom Empfänger 32B eine Fehlkonfiguration entdeckt, so wurde das Flag SKFB gesetzt und es wird unmittelbar zum Sende-Programmmodul P4 für die Seite B gesprungen. Ist das Flag SKFB nicht gesetzt, so wird geprüft, ob die eigene Adresse Adl ist. Wenn ja, wird das Senden des Telegramms übersprungen.

Somit wird für den Sender 31A das Senden von Telegrammen nur dann ausgelöst, wenn das Flag SKFB nicht gesetzt ist und die Prozessoreinheit nicht die Endstelle mit der Adresse Adl ist.

Die Adresse AdA durchläuft den Wertebereich von Adm bis Adn. Liegt die Adresse AdA nicht in diesem Bereich, so wird mit dem Kriterium Fehler S eine Unendlichschleife angesprungen und der Watchdog startet eine Neuinitialisierung. Liegt die Adresse AdA im vorgeschriebenen Bereich, so wird daraus das Sendebyte 1 erzeugt. Daraufhin wird das Sendebyte 1 ins Sende-Fifo F31A geschoben und damit der Sendevorgang des UART ausgelöst.

Aus der Adresse AdA wird der ins Überwachungsinformations-Datenfeld zeigende Datenzeiger, bezogen auf Byte 1 der Prozessoreinheitsdaten von AdA errechnet. Dann werden die Sendebytes 2 bis 8 ins Sende-Fifo F31A geschoben.

Der nächste Wert für die Adresse AdA wird durch Incrementieren erreicht, es sei denn, der Grenzwert Adn ist erreicht. Im letzteren Fall wird die Adresse AdA auf die Adresse Adm der lokalen Prozessoreinheit gesetzt.

Der Funktionsblock für den Sender 31B entspricht strukturell dem Funktionsblock für den Sender 31A. Für den Sender 31B wird das Senden von Telegrammen nur dann ausgelöst, wenn das Flag SKFA nicht gesetzt ist und die Prozessoreinheit nicht die Endstelle mit der Adresse Adn ist. Die Adresse AdB durchläuft den Bereich von Adn bis Adl durch schrittweise Dekrementierung.

Somit ergibt sich aus Fig. 5 ein Flußdiagramm für den Sender 31B dadurch, daß SKFA durch SKFB, Adm = 1 durch Adm = Adn, und AdA durch AdB ersetzt werden.

Die Figuren 6 und 7 zeigen Flußdiagramme für den Empfangsteil des Programmmoduls.

Aus Fig. 6 geht die empffangsseitige Aufruflogik hervor. Das dem Flußdiagramm nach Fig. 7 entsprechende Unterprogramm wird vom Hauptprogramm periodisch alle 5 ms aufgerufen. Mit dieser Zeitbasis werden die Zeiten T1 für die Empfänger 32A und 32B erzeugt, die insbesondere jeweils 100 ms betragen. Es folgt eine Aufruflogik für die Empfangsfunktionsblöcke EA und EB, die aus der Empfangslogik und der Auswertung von Auszeit TA und Fehlzeit TF bestehen.

Der Empfangsteil EA für den Empfänger wird nur dann angesprungen, wenn das Flag LKF nicht gesetzt ist und die eigene Adresse Adm nicht Adl ist. Bei Adm = Adl wird sicherheitshalber die Meldung KTA zurückgesetzt. Der Empfangsteil EB für den Empfänger 32b wird nur dann angesprungen, wenn das Flag LKF nicht gesetzt ist und die eigene Adresse Adm nicht Adn ist. Bei Adm = Adn wird sicherheitshalber die Meldung KTB rückgesetzt.

Fig. 7 zeigt ein Flußdiagramm für den Empfänger 32a bzw. den Teilprozeß EA nach Fig. 6, der den Empfang über den Übertragungsabschnitt A betrifft.

Der Empfänger 32A soll vom Betriebszustand "kein Empfang" über den "Phasensuchlauf" in den Normalbetriebszustand "Synchron" laufen. Die Empfänger-Zustands-Flags EF und SF stellen für den Empfänger 32A die entsprechenden drei Haupt-Funktionsäste des Flußdiagramms nach Fig. 7 ein.

Der Funktionsast FAO wird durchlaufen, wenn am Empfänger 32a, z.B. im Zustand nach der Initialisierung, keine Nachrichten empfangen werden. Der Zustand "kein Empfang" wird verlassen, wenn durch den UART-Empfänger ein vollständiges Byte richtig empfangen wurde, so daß das DR-Bit gesetzt ist.

Wird dagegen am Empfänger 32A eine Nachricht empfangen und fehlende Synchronität festgestellt, so fehlt das Synchron-Flag SF und der Funktionsast FA10 für Phasensuchlauf wird durchlaufen. Der Funktionsast wird verlassen, wenn im nächsten Durchlauf, d.h. nach 5ms, kein neues Byte empfangen wurde und somit DR-Bit = nein gilt.

Im Normalbetrieb wird allerdings synchroner Empfang festgestellt. Die Flags EF und SF sind gesetzt. Hier schaltet das Prüf-Flag PF zwischen der vom Interrupt gesteuerten Datenübergabe aus dem Empfangs-Fifo F32A in den Puffer des Empfängers 32A und der anschließenden Prüfung auf Pause mit Datenauswertung.

Im folgenden werden die Funktionsäste der Empfangslogik näher erläutert.

Im Funktionsast FA0 werden zweckmäßigerweise zunächst die Flags SF und PF zurückgesetzt. Wenn das DR-Bit nicht gesetzt ist, wird nach Ende E gesprungen. Ist das DR-Bit gesetzt, so werden im Prozeßschritt P5 das Byte bzw. die Bytes aus dem Fifo geholt, bis DR = nein ansteht. Daraufhin wird das Flag EF gesetzt.

Der Funktionsast FA0 kann ggf. entfallen, wenn das Flag EF als interne Information nicht benötigt wird. In diesem Fall werden das Synchronflag IF und das Prüfflag PF im Anschluß an den Prozeßschritt P11 anstelle des Rücksetzens des Flags EF zurückgesetzt.

Im Funktionsast FA10 für Phasensuchlauf ist es zweckmäßig, zunächst sicherheitshalber das Flag PF rückzusetzen.

Sind keine neuen Daten eingelaufen d.h. das DR-Bit nicht wieder gesetzt, so ist die Pause gefunden. In diesem Fall wird das Flag SF gesetzt und die Timerfunktion für die Zeit T1 wird für die Ausfallprüfung mit der Zeit T1=100 ms gestartet. Wenn Daten eingelaufen sind bzw. das DR-Bit gesetzt, ist die Pause nicht gefunden. Deshalb wird der Detektor wieder aktiviert, indem das DR-Bit durch Entladen des Fifos rückgesetzt wird.

Sind das Empfangsflag EF und das Synchronflag SF gesetzt, so wird der Funktionsast FA11 durchlaufen. Dies ist der Normalbetrieb.

Im Normalfall laufen 8 Bytes in 50 ms ein, der mit T1 geladene Zeitgeber darf somit nicht bis O laufen, denn das bedeutet, daß während 100 ms keine acht Byte eingetroffen sind. Solange die Zeit T1 noch nicht O ist (FA1100), wird auf den Interrupt RDAI gewartet.

Wird die Zeit TA bis O gezählt, ohne daß der Interrupt RDAI kommt, wurden entweder keine Daten empfangen, oder der Interrupt RDAI wurde durch die höhere Priorität eines Receiver-Line-Status-Interrupt unterdrückt, d.h. Empfangszeichen werden durch Bitfehler verfälscht. Die Daten werden dann zwar aus dem Fifo F32A geholt, um den Empfänger 32A wieder zu aktivieren, jedoch im Prozeßschritt P11 als Information verworfen. Daraufhin wird das Flag SF zurückgesetzt, so daß der Empfänger 32A wieder neu synchronisiert werden muß.

Fehlt der Interrupt RDAI, so wird nach Ende E gesprungen. Bei vorhandenem Interrupt RDAI werden im Prozeßschritt P7 die im Fifo F32A gespeicherten Daten zum Puffer des Empfängers 32A übertragen und das Prüfflag PF gesetzt.

Im folgenden Modulansprung wird der Funktionsast FA111 durchlaufen. Dabei wird das Flag PF zurückgesetzt, und der Zeitgeber für die Zeit T1 auf den Startwert gesetzt.

Über das DR-Bit wird geprüft, ob der Empfänger 32A noch zur Pause synchron ist. Ist das DR-Bit gesetzt, so ist ein weiteres Byte eingelaufen, d.h. die Synchronität ist verloren. Die Daten werden verworfen und das Flag SF wird zurückgesetzt. Damit wird der Normalbetrieb verlassen, und mit dem Phasensuchlauf neu synchronisiert.

Ist das DR-Bit nicht gesetzt, ist die Pause und damit die Synchronität und die Richtigkeit der Daten im Puffer des Empfängers 32A bestätigt und es wird der Funktionsast FA 1110 durchlaufen. Dabei wird ein bei fehlendem Empfang am Empfänger 32A gesetztes Flag KTA gelöscht. Im Falle der Weiterbildung nach Fig. 8 folgt der Teilprozeß P9.

Anschließend werden im Prozeßschritt P8 das zweite bis achte Byte der im Puffer des Empfängers 32A befindlichen Daten in die durch die Adresse des Telegrammes definierten Register der Speichervorrichtung eingetragen.

Vor dem Ende des Empfangsmoduls ist als Option der Teilprozeß P10 vorgesehen, der mit dem ebenfalls optionalen Teilprozeß P9 verknüpft ist.

Die strichliert dargestellten Teilprozesse bzw. Prozeßschritte können ggf. entfallen. Sind sie vorgesehen, so ergibt sich der anhand von Fig. 8 erläuterte Ablauf.

Der Teilprozeß P9 im Funktionsast FA 1110 nach Fig. 8 beginnt damit, daß die Meldung KTA "vom Übertragungsabschnitt A werden keine Telegramme empfangen" gelöscht wird. Die Auszeit TA wird auf den Anfangswert für 1s gesetzt. Aus dem ersten Byte des Telegramms wird die zugehörige Adresse ermittelt und geprüft, ob die Adresse im zulässigen Bereich liegt. Wenn die Adresse außerhalb des zulässigen Bereichs von Adl bis Adm-1 liegt, wird die Schutzzeit TS auf den Startwert für 1s gesetzt und zu dem Prozeßschritt SKF gesprungen, in dem das Flag SKF (System-Konfigurations-Fehler) gesetzt wird.

Handelt es sich um die Adresse der Nachbarstation, wird die Fehlzeit TF auf den Anfangswert für 3s gesetzt und ein gesetztes Flag SKF gelöscht, wenn die Schutzzeit TS ohne Adressbereichsverletzung abgelaufen ist, d. h. ein für die Schutzzeit TS vorgesehenes Register den Wert O enthält. Darauf folgt der Prozeßschritt P8 nach Fig. 8.

Im Teilprozeß P10 schließt sich die Überprüfung an, ob die Auszeit TA bzw. Fehlzeit TF bis O gelaufen sind, d.h. ob während einer Zeitspanne von 1s keine Telegamme empfangen wurden, bzw. während einer Zeitspanne von 3s kein Telegramm der Nachbarstation empfangen wurde. Ist weder die Auszeit TA noch die Fehlzeit TF gleich O, wird nach "Ende E" gesprungen.

Bei Auszeit TA=O werden das Flag EF, die Meldung KTA "von Abschnitt A werden keine Telegramme empfangen" gesetzt und ein gesetztes Flag SKFA zurückgesetzt.

Sind die Auszeit TA nicht O und die Fehlzeit TF=O, wird das Flag SKFA gesetzt. In beiden Fällen werden die Auszeit TA und Fehlzeit TF auf den jeweiligen Startwert gesetzt, um ein Setzen der Flags bzw. Meldungen bei jedem Durchlauf zu vermeiden.

Damit ist die Empfangslogik beschrieben, die einzelnen Funktionsäste des Empfängers laufen an der Marke "Ende E" wieder zusammen, ausgenommen der Ansprung von SKA, wenn die Telegrammadresse außerhalb des Bereichs liegt.

Die Flußdiagramme nach Fig. 7 und 8 gelten für den Empfänger 32B bzw. den Teilprozeß EB in entsprechender Weise, wobei die Übertragungsabschnitte A und B und die dazugehörigen Angaben sinngemäß miteinander zu vertauschen sind.

## Patentansprüche

1. Verfahren zur In-Betrieb-Überwachung von Übertragungseinrichtungen der elektrischen Nachrichtenübertragungstechnik, für eine Überwachungsvorrichtung mit mehreren, jeweils mit einer individuellen Adresse versehenen und über Abschnitte eines bidirektionalen Fernwirkkanals (2) zu einer Kettenschaltung miteinander verbundenen, jeweils einer Betriebsstelle zugeordneten Prozessoreinheiten (11, 12, 13....), von denen wenigstens eine, die zwischen zwei benachbarten Prozessoreinheiten (11, 12, 13....) angeordnet ist, je Übertragungsrichtung sowohl Überwachungsinformationen enthaltende Fernwirktelegramme empfängt als auch Überwachungsinformationen enthaltende Fernwirktelegramme taktgesteuert sendet, in der zugeordneten Betriebsstelle gebildete und aus beiden Richtungen empfangenen Überwachungsinformationen in einer Speichervorrichtung (5) speichert, und gespeicherte Überwachungsinformationen örtlich ausgibt,
**dadurch gekennzeichnet,**
daß die Speichervorrichtungen (5) aller Prozessoreinheiten jeweils die Überwachungsinformationen aller Betriebsstellen der Übertragungseinrichtung ständig bereithalten und daß die Sendevorrichtungen (32a; 32b) der Prozessoreinheiten (11, 12, 13...) jeweils von sich aus sequentiell an jede benachbarte Prozessoreinheit Fernwirktelegramme aussenden und daß die Fernwirktelegramme jeweils wenigstens den Teil der in der Speichervorrichtung (5) gespeicherten Überwachungsinformationen enthalten, der zu den Betriebsstellen gehört, deren Prozessoreinheiten (11, 12, 13...) mit der das Fernwirktelegramm empfangenden Prozessoreinheit über die sendende Prozessoreinheit Informationen austauschen.

2. Verfahren nach Anspruch 1,
**dadurch gekennzeichnet,**
daß je Übertragungsrichtung eine Folge von Telegrammen mit zyklisch wechselnder Adresse erzeugt wird und daß eine Prozessoreinheit, die zwei benachbarte Prozessoreinheiten (11, 12, 13...) hat, die Fernwirktelegramme abwechselnd der einen und der anderen Sendevorrichtung zur Verfügung stellt.

3. Verfahren nach Anspruch 1 oder 2,
**dadurch gekennzeichnet,**
daß das Fernwirktelegramm jeweils ein Adreßbyte mit der Adresse einer der Prozessoreinheiten, mehrere Meldungsbytes mit Informationen aus der die Adresse aufweisenden Prozessoreinheit (11, 12, 13....) und ein Byte mit Informationen über die in der die Adresse aufweisenden Prozessoreinheit eingestellte Konfiguration der Überwachungsvorrichtung enthält.

4. Verfahren nach einem der Ansprüche 1 bis 3,
**dadurch gekennzeichnet,**
daß bei fehlendem Empfang auf der Seite des einen Übertragungsabschnittes in der Speichervorrichtung (5) die Überwachungsinformationen verworfen werden, die zur aktuellen Adresse des an den anderen Übertragungsabschnitt auszusendenden nächsten Fernwirktelegramms gehören. (Fig. 4, 5).

5. Verfahren nach einem der Ansprüche 1 bis 4,
**dadurch gekennzeichnet,**
daß vor der Aussendung des jeweiligen Fenwirktelegramms zunächst die aus dem jeweiligen Konfigurationsbyte resultierende Konfiguration der Überwachungsvorrichtung und die aus dem jeweiligen Adreßbyte resultierende Adresse geprüft werden und daß das Fernwirktelegramm nur bei fehlerfreier Konfiguration der Überwachungsvorrichtung und erlaubter Adresse gesendet wird und daß daraufhin die aktuelle Adresse in vorgegebener Abhängigkeit von der Senderichtung und der aktuellen Adresse inkrementiert, dekrementiert oder auf den Wert der örtlichen Adresse gesetzt wird. (Fig.6)

6. Verfahren nach einem der Ansprüche 1 bis 5,
**dadurch gekennzeichnet,**
daß die Sende-/Empfangsvorrichtungen (3a, 3b) jeweils ein UART mit FIFO ist, bei dem im Falle eines vollständig empfangenen Bytes ein Data-Ready-Bit gesetzt und im Falle einer vorgegebenen Zahl von eingelaufenen Bytes ein Received-Data-Available-Interrupt gebildet wird und daß die Fernwirktelegramme jeweils durch eine Pause definierter Dauer voneinander getrennt sind, und daß periodisch zum Empfang der Fernwirktelegramme zunächst in einer Initialisierungsphase ein Synchron-Flag und ein Prüf-Flag gegebenenfalls zurückgesetzt werden und daß daraufhin bei fehlendem Synchron-Flag entweder bei fehlendem Data-Ready-Bit das Synchron-Flag gesetzt oder bei gesetztem Data-Ready-Bit die im FIFO gespeicherten Bytes gelöscht werden und daß bei Synchron-Flag entweder bei fehlendem Prüf-Flag und gesetztem Received-Data-Available-Interrupt die im FIFO gespeicherten Daten in dem Puffer geschrieben und das Prüf-Flag gesetzt werden oder bei gesetztem Prüf-Flag das Prüfflag zurückgesetzt und daraufhin entweder bei fehlendem Data-Ready-Bit die im Puffer gespeicherten Daten in die Speichervorrichtung (5) geschoben oder bei gesetztem Data-Ready-Bit das Synchron-Flag zurückgesetzt wird (Fig. 8).

7. Verfahren nach Anspruch 6,
**dadurch gekennzeichnet,**
daß die im Puffer gespeicherten Daten nur dann in die Speichervorrichtung (5) geschoben werden, wenn die Adresse des empfangenen Fernwirktelegrammes in dem durch die Konfiguration der Überwachungsvorrichtung vorgegebenen Adreßbereich liegt.

8. Verfahren nach einem der Ansprüche 1 bis 7,
**dadurch gekennzeichnet,**
daß bei Ablauf einer Auszeit fehlender Empfang gemeldet, bei Ablauf einer Fehlzeit ein System-Konfigurationsfehler-Flag gesetzt und/oder ein Systemkonfigurations-Flag nach Beseitigung der Ursache und Ablauf einer Schutzzeit zurückgesetzt wird.

9. Vorrichtung zur In-Betrieb-Überwachung von Übertragungseinrichtungen der elektrischen Nachrichtenübertragungstechnik, zur Durchführung des Verfahrens nach Anspruch 1, mit mehreren, jeweils mit einer individuellen Adresse versehenen und über Abschnitte eines bidirektionalen Fernwirkkanals (2) zu einer Kettenschaltung miteinander verbundenen, jeweils einer Betriebsstelle zugeordneten Prozessoreinheiten (11, 12, 13....), die wenigstens je angeschlossenem Übertragungsabschnitt eine Sende-/Empfangsvorrichtung (3a;3b) mit einer Empfangsvorrichtung (31a;31b) zum Empfangen von Überwachungsinformationen enthaltenden Fernwirktelegrammen und einer Sendevorrichtung (32a:32b) zum sequentiellen Senden von Überwachungsinformationen enthaltenden Fernwirktelegrammen enthalten und eine Speichervorrichtung (5) zur Speicherung von in der zugeordneten Betriebsstelle gebildeten und mittels der Empfangsvorrichtungen (31a:31b) empfangenen Überwachungsinformationen und eine Vorrichtung 48 zur örtlichen Ausgabe gespeicherter Überwachungsinformationen aufweisen,
dadurch gekennzeichnet, daß die Speichervorrichtungen (5) jeweils durch einen Speicher mit wahlfreiem Zugriff zur Speicherung der Überwachungsinformationen aller Betriebsstellen der überwachten Übertragungseinrichtung gebildet ist und daß die Sendevorrichtungen (32a;32b) der Prozessoreinheiten (11, 12, 13...) jeweils derart steuerbar sind,
daß sie an jede benachbarte Prozessoreinheit sequentiell Fernwirktelegramme aussenden und daß die Fernwirktelegramme jeweils wenigstens den Teil der in der Speichervorrichtung (5) gespeicherten Überwachungsinformationen enthalten, der zu den Betriebsstellen gehört, deren Prozessoreinheiten mit der das Fernwirktelegramm empfangenden
Prozessoreinheit über die sendende Prozessoreinheit verbunden sind.

10. Vorrichtung nach Anspruch 9,
**dadurch gekennzeichnet,**
daß die Speichervorrichtungen (5) durch Speicher mit wahlfreiem Zugriff gebildet sind, die je Prozessoreinheit einem durch die Adresse der jeweiligen Prozessoreinheit (11, 12, 13....) definierten Speicherbereich aufweisen.

## Claims

1. Method for the in-service monitoring of electrical communications transmission equipment, for a monitoring device having a plurality of processor units (11, 12, 13 ...) provided in each case with an individual address and connected to one another to form a chain circuit via sections of a bidirectional telecontrol channel (2) and assigned to one station in each case, at least one of which processor units, which is arranged between two neighbouring processor units (11, 12, 13 ...), for each transmission direction receives both telecontrol telegrams containing monitoring information and transmits telecontrol telegrams containing monitoring information in a clock-controlled manner, stores monitoring information formed in the assigned station and received from both directions in a storage device (5), and outputs stored monitoring information locally, characterized in that the storage devices (5) of all processor units hold in each case the monitoring information of all the stations of the transmission equipment constantly available, and in that in each case the transmitting devices (32a; 32b) of the processor units (11, 12, 13 ...) automatically transmit telecontrol telegrams sequentially to each neighbouring processor unit, and in that the telecontrol telegrams contain in each case at least the part of the monitoring information stored in the storage device (5) which is associated with the stations whose processor units (11, 12, 13 ...) are exchanging information via the transmitting processor unit with the processor unit receiving the telecontrol telegram.

2. Method according to Claim 1, characterized in that a sequence of telegrams with cyclically changing address is generated for each transmission direction, and in that a processor unit, which has two neighbouring processor units (11, 12, 13 ...), makes the telecontrol telegrams alternately available to the one and the other transmitting device.

3. Method according to Claim 1 or 2, characterized in that the telecontrol telegram contains in each case one address byte with the address of one of the processor units, a plurality of message bytes with information from the processor unit (11, 12, 13 ...) having the address, and one byte with information about the configuration of the monitoring device set in the processor unit having the address.

4. Method according to one of Claims 1 to 3, characterized in that if there is no reception on the side of the one transmission section, the monitoring information associated with the current address of the next telecontrol telegram to be transmitted to the other transmission section is discarded in the storage device (5). (Figs. 4, 5).

5. Method according to one of Claims 1 to 4, characterized in that before transmitting the respective telecontrol telegram, first of all the configuration of the monitoring device resulting from the respective configuration byte and the address resulting from the respective address byte are checked, and in that the telecontrol telegram is only transmitted if the configuration of the monitoring device is error-free and the address is permitted, and in that following that, depending in a predetermined manner on the transmitting direction and the current address, the current address is incremented, decremented or set to the value of the local address. (Fig. 6).

6. Method according to one of Claims 1 to 5, characterized in that the transmitting/receiving devices (3a, 3b) are in each case a UART with FIFO, in which in the case where a complete byte is received a data-ready bit is set, and in the case of a predetermined number of incoming bytes a received-data-available interrupt is formed, and in that the telecontrol telegrams are separated from one another in each case by a pause of a defined duration, and in that periodically for receiving the telecontrol telegram, first of all in an initialization phase a synchronous flag and a check flag are reset if necessary, and in that following this, if the synchronous flag is missing, either the synchronous flag is set if the data-ready bit is missing, or the bytes stored in the FIFO are deleted if the data-ready bit is set, and in that in the case of the synchronous flag, either the data stored in the FIFO are written into the buffer and the check flag is set if the check flag is missing and the received-data-available interrupt is set, or the check flag is reset if the check flag is set, and following that either the data stored in the buffer are shifted into the storage device (5) if the data-ready bit is missing, or the synchronous flag is reset if the data-ready bit is set (Fig. 8).

7. Method according to Claim 6, characterized in that the data stored in the buffer are only shifted into the storage device (5) if the address of the received telecontrol telegram lies in the address range predetermined by the configuration of the monitoring device.

8. Method according to one of Claims 1 to 7, characterized in that no-reception is reported after the expiry of an off-time, in that after expiry of a missing-time a system configuration error flag is set and/or a system configuration flag is reset after rectification of the cause and expiry of a protection time.

9. Device for the in-service monitoring of electrical communications transmission equipment, for carrying out the method according to Claim 1, having a plurality of processor units (11, 12, 13 ...) provided in each case with an individual address and connected to one another to form a chain circuit via sections of a bidirectional telecontrol channel (2) and assigned to one station in each case, which processor units contain for each transmission section connected a transmitting/receiving device (3a; 3b) having a receiving device (31a; 31b) for receiving telecontrol telegrams containing monitoring information and a transmitting device (32a; 32b) for sequentially transmitting telecontrol telegrams containing monitoring information, and a storage device (5) for storing monitoring information formed in the assigned station and received by means of the receiving devices (31a; 31b), and a device (48) for the local output of stored monitoring information, characterized in that the storage devices (5) are formed in each case by a memory with random access for storing the monitoring information of all stations of the monitored transmission equipment, and in that the transmitting devices (32a; 32b) of the processor units (11, 12, 13 ...) can in each case be controlled in such a way that they sequentially transmit telecontrol telegrams to each neighbouring processor unit, and in that the telecontrol telegrams contain in each case at least the part of the monitoring information stored in the storage device (5) which is associated with the stations whose processor units are connected via the transmitting processor unit to the processor unit receiving the telecontrol telegram.

10. Device according to Claim 9, characterized in that the storage devices (5) are formed by memories with random access which have for each processor unit a memory area defined by the address of the respective processor unit (11, 12, 13 ...).

## Revendications

1. Procédé de surveillance en exploitation de dispositifs de transmission en technique électrique de transmission d'informations, pour un dispositif de surveillance comportant plusieurs unités (11,12,13...) de processeur, qui ont chacun une adresse individuelle, qui sont reliées l'une à l'autre en un circuit en chaîne par l'intermédiaire d'un canal (2) bidirectionnel de télécommande, qui sont associées chacune à un poste d'exploitation, et dont au moins l'une, qui est disposée entre deux unités (11, 12, 13...) de processeur voisines, pour chaque direction de transmission, à la fois reçoit des télégrammes de télécommande contenant des informations de surveillance et envoie sous la commande d'une cadence, des télégrammes de télécommande contenant des informations de surveillance, mémorise, dans un dispositif (5) de mémoire, des informations de surveillance formées dans le poste d'exploitation associé et reçues des deux directions, et fournit localement des informations de surveillance mémorisées,
caractérisé en ce que
les dispositifs (5) de mémoire de toutes les unités de processeurs; tiennent prêtes en permanence les informations de surveillance de tous les postes d'exploitation du dispositif de transmission, les dispositifs (32a; 32b) d'émission des unités (11, 12, 13...) de processeur envoient chacun de façon séquentielle, d'eux-mêmes, à chaque unité de processeur voisine, des télégrammes de télécommande et les télégrammes de télécommande contiennent chacun au moins la partie des informations de surveillance mémorisées dans le dispositif (5) de mémoire, qui est associée aux postes d'exploitation, dont les unités (11, 12, 13...) de processeur échangent des informations avec l'unité de processeur recevant le télégramme de télécommande par l'intermédiaire de l'unité de processeur émettrice.

2. Procédé suivant la revendication 1,
caractérisé en ce que
on produit, pour chaque direction de transmission, une suite de télégrammes ayant une adresse changeant cycliquement et une unité de processeur ayant deux unités (11, 12, 13...) de processeur voisines met à la disposition en alternance, de l'un ou de l'autre des dispositifs d'émission, les télégrammes de télécommande.

3. Procédé suivant la revendication 1 ou 2,
caractérisé en ce que
le télégramme de télécommande contient un octet d'adresse comprenant l'adresse d'une des unités de processeur, plusieurs octets de message comprenant des informations provenant de l'unité (11, 12, 13...) de processeur ayant l'adresse et un octet comprenant des informations concernant la configuration, établie dans l'unité de processeur ayant l'adresse, du dispositif de surveillance.

4. Procédé suivant l'une des revendications 1 à 3,
caractérisé en ce que
on rejette, en absence de réception du côté de l'une des sections de transmission dans le dispositif (5) de mémoire, les informations de surveillance, qui correspondent à l'adresse actuelle du prochain télégramme de télécommande à émettre à l'autre section de transmission. (Figures 4, 5).

5. Procédé suivant l'une des revendications 1 à 4,
caractérisé en ce que
on vérifie, avant l'émission du télégramme de télécommande considéré, d'abord la configuration du dispositif de surveillance, qui résulte de l'octet de configuration, et l'adresse résultant de l'octet d'adresse, on n'émet le télégramme de télécommande qu'en cas d'une configuration exempte d'erreurs du dispositif de surveillance et d'une adresse autorisée, et ensuite on incrémente, décrémente ou on met à la valeur de l'adresse locale l'adresse actuelle suivant une fonction prescrite de la direction d'émission et de l'adresse actuelle (figure 6).

6. Procédé suivant l'une des revendications 1 à 5,
caractérisé en ce que
les dispositifs (3a, 3b) d'émission/réception sont chacun un UART à FIFO, dans lequel on positionne, dans le cas d'un octet reçu complet, un bit Data-Ready et dans lequel on forme, dans le cas de l'entrée d'un nombre prescrit d'octets, une interruption Received-Data-Available, et on sépare les uns des autres les télégrammes de télécommande par une pause de durée définie, on remet à l'état initial périodiquement, pour recevoir les télégrammes de télécommande, d'abord dans une phase d'initialisation à un indicateur de synchronisation et à un indicateur de vérification, et ensuite, en cas d'absence de l'indicateur de synchronisation, soit on positionne, si le bit de Data-Ready est absent, l'indicateur de synchronisation, soit on efface, si le bit Data-Ready est positionné, les octets mémorisés dans le FIFO et, en cas de présence de l'indicateur de synchronisation, soit on mémorise dans le tampon, si l'indicateur de vérification est absent et si l'interruption Received-Data-Available est positionnée, les données mémorisées dans le FIFO, et on positionne l'indicateur de vérification, soit on remet à l'état initial, si l'indicateur de vérification est positionné l'indicateur de vérification et ensuite, soit on déplace, en cas d'absence du bit Data-Ready, les données mémorisées dans le tampon, dans le dispositif (5) de mémoire, soit on remet à l'état initial, si le bit Data-Ready est positionné, l'indicateur de synchronisation. (Figure 8).

7. Procédé suivant la revendication 6,
caractérisé en ce que
on ne déplace dans le dispositif (5) de mémoire les données mémorisées dans le tampon, que lorsque l'adresse du télégramme de télécommande reçu se trouve dans la zone d'adresses prescrite par la configuration du dispositif de surveillance.

8. Procédé suivant l'une des revendications 1 à 7,
caractérisé en ce que
on positionne, lorsque l'écoulement d'un temps d'arrêt d'absence de réception a été signalé, un indicateur d'erreurs de configuration du système lorsqu'un temps d'absence s'est écoulé et/ou on remet à l'état initial un indicateur de configuration du système après avoir éliminé l'origine de l'absence et après que se soit écoulé un temps de sécurité.

9. Dispositif de surveillance en exploitation de dispositifs de transmission en technique électrique de transmission d'informations, pour mettre en oeuvre le procédé suivant la revendication 1, comportant plusieurs unités (11, 12, 13) de processeur, qui ont chacune une adresse individuelle, qui sont reliées les unes aux autres en un circuit en chaîne par l'intermédiaire de sections d'un canal (2) bidirectionnel de télécommande, qui sont associées chacune à un poste d'exploitation, qui comprennent, au moins pour chaque section de transmission connectée, un dispositif (3a; 3b) d'émission/réception comportant un dispositif (31a; 31b) de réception destiné à recevoir des télégrammes de télécommande contenant des informations de surveillance et un dispositif (32a; 32b) d'émission destiné à émettre de façon séquentielle des télégrammes de télécommande contenant des informations de surveillance et qui comportent un dispositif (5) de mémoire destiné à mémoriser des informations de surveillance formées dans le poste d'exploitation associé et reçues au moyen des dispositifs (31a, 31b) de réception et un dispositif (48) pour fournir localement des informations de surveillance mémorisées,
caractérisé en ce que les dispositifs (5) de mémoire sont chacun formés d'une mémoire à accès sélectif destinée à mémoriser les informations de surveillance de tous les postes d'exploitation du dispositif de transmission surveillé et les dispositifs (32a; 32b) d'émission des unités (11, 12, 13...) de processeur sont susceptibles d'être chacune commandées,
de telle sorte qu'ils envoient séquentiellement à chaque unité de processeur voisine des télégrammes de télécommande et que les télégrammes de télécommande contiennent chacun au moins la partie des informations de surveillance mémorisées dans le dispositif (5) de mémoire, qui correspond aux postes d'exploitation, dont les unités de processeur sont reliées par l'intermédiaire de l'unité de processeur émettrice à l'unité de processeur recevant le télégramme de télécommande.

10. Dispositif suivant la revendication 9,
caractérisé en ce que
les dispositifs (5) de mémoire sont formés de mémoires à accès sélectif, qui ont, pour chaque unité de processeur, une zone de mémoire définie par l'adresse de l'unité (11, 12, 13...) de processeur considérée.
